# EUROPEAN PATENT SPECIFICATION

(11) **EP 2 903 325 B1**
(45) Date of publication and mention of the grant of the patent: **20.12.2017**
(21) Application number: 14290011.7
(22) Date of filing: 29.01.2014
(51) Int. Cl.: H04W 24/02, H04W 4/06, H04L 29/06

(54) **MBSFN area reconfiguration in a mobile network**
MBSFN-Bereich-Rekonfiguration in einem mobilen Netzwerk
Reconfiguration de zone MBSFN dans un réseau mobile

(43) Date of publication of application: 05.08.2015
(73) Proprietor: ALCATEL LUCENT, 92100 Boulogne-Billancourt (FR)
(72) Inventor: Linden, Gabriel, 91620 Nozay (FR); Landais, Bruno, 22304 Lannion (FR); Godin, Philippe, 91620 Nozay (FR)
(74) Representative: El Manouni, Josiane

(56) References cited:
- WO-A1-2014/004787
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP DRAFT; 36300-B80, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 6 January 2014 (2014-01-06), XP050752666, Retrieved from the Internet: URL:http://www.3gpp.org/ftp/tsg_ran/WG2_RL 2/Specifications/201312_final_specs_after_ RAN_62/ [retrieved on 2014-01-06]
- 3GPP: "3rd Generation Partnership Project; Technical Specification Group Radio Access Network; Evolved Universal Terrestrial Radio Access Network (E-UTRAN); M3 Application Protocol (M3AP) (Release 11)", 3RD GENERATION PARTNERSHIP PROJECT (3GPP); TECHNICALSPECIFICATION (TS), XX, XX, no. TS 36.444 V11.5.0, 15 March 2013 (2013-03-15), pages 1-64, XP002715431,
- ALCATEL-LUCENT ET AL: "Synchronization issue for E-MBMS signaling", 3GPP DRAFT; R3-080848 SYNCHRONIZATION ISSUE FOR E-MBMS SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050164043, [retrieved on 2008-03-26]
- CATT: "Stage 2 Issues for Further MBMS Operations Support", 3GPP DRAFT; R2-140137 STAGE 2 ISSUES FOR FURTHER MBMS OPERATIONS SUPPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Prague, Czech Republic; 20140210 - 20140214 27 January 2014 (2014-01-27), XP050753823, Retrieved from the Internet: URL:http://www.3gpp.org/ftp/tsg_ran/WG2_RL 2/TSGR2_85/Docs/ [retrieved on 2014-01-27]

## Description

The present invention generally relates to mobile communication networks and systems.

Detailed descriptions of mobile communication networks and systems can be found in the literature, such as in particular in Technical Specifications published by standardization bodies such as for example 3GPP (3^{rd} Generation Partnership Project).

In general, in a mobile communication system, an User Equipment UE has access to mobile services via a mobile communication network.

An example of mobile communication system is EPS (Evolved Packet System), specified by 3GPP.

An example of mobile services is MBMS (Multimedia Broadcast/Multicast Services). A description of MBMS architecture, in particular for EPS, can be found in particular in 3GPP TS 23.246. MBMS for EPS is also called eMBMS (evolved MBMS). eMBMS brings improved performance, thanks to functionalities such as in particular Single Frequency Network (SFN) mode of operation.

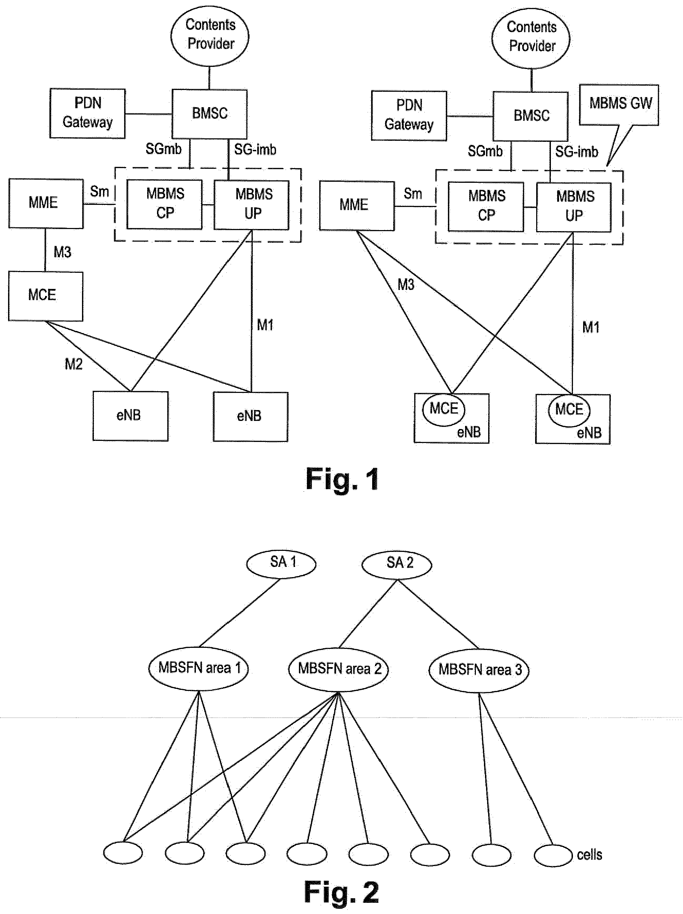

Two alternatives for eMBMS architecture deployment for MBSFN mode of operation, respectively called "centralized MCE architecture" and "distributed MCE architecture" are illustrated in figure 1 taken from 3GPP TS 36.300. A Multi-cell/multicast Coordination Entity (MCE) is a MBMS logical control entity whose functions include, in particular, the admission control and the allocation of the radio resources used by all eNBs in the MBFSN area for multi-cell MBMS transmissions using MBSFN (Multimedia Broadcast multicast service Single Frequency Network) operation, also called MBSFN transmission. A control plane interface is provided between eNB and MCE, called M2 interface, specified in particular in 3GPP TS 36.443. A control plane interface is provided between MCE and MME, called M3 interface, specified in particular in 3GPP TS 36.444.

MBSFN mode of operation brings many benefits, in particular an increased network capacity. MBSFN however still needs to be improved in some aspects, as recognized by the inventors and as will be described with more detail. In particular, there is a need to enable network operators to reconfigure MBSFN areas without having to interrupt MBMS service delivery and while preserving consistency of MBMS services throughout said MBSFN areas, especially (though not exclusively) in a distributed MCE architecture. More generally, there is a need to improve support of MBMS in such systems (such as EPS) and/or MBMS bearer services provided by such systems.

Embodiments of the present invention in particular address such needs.

These and other objects are achieved, in a first aspect, by a Multi-cell/multicast Coordination Entity MCE of a mobile network wherein an MBSFN area is controlled by a set of MCEs, said MCE controlled by a Mobility Management Entity MME, said MCE adapted to:
- send MCE reconfiguration update information to said MME informing said MME of any SAI added to the MCE or any SAI removed from MCE when performing an MBSFN area reconfiguration;
- receive from said MME a MBMS Session Start Request for any MBMS session in any SAI added to the MCE per said MBSFN area reconfiguration and/or a MBMS Session Stop Request for any MBMS session in any SAI removed from the MCE per said MBSFN area reconfiguration.

These and other objects are achieved, in a second aspect, by a Mobility Management Entity MME of a mobile network wherein an MBSFN area is controlled by a set of Multi-cell/multicast Coordination Entities MCEs, said MME adapted to:
- upon reception from said MCE of MCE reconfiguration information including any SAI added or removed to the MCE per said MBSFN area reconfiguration, send to said MCE a MBMS Session Start Request for any MBMS session in any SAI added to the MCE in the MCE reconfiguration information received from said MCEand/or a MBMS Session Stop Request for any MBMS session in any SAI removed from the MCE in the MCE reconfiguration information received from said MCE.

These and other objects are achieved, in a further aspect, by a method for MBSFN area reconfiguration in a mobile network wherein wherein an MBSFN area is controlled by a set of Multi-cell/multicast Coordination Entities MCEs, said method comprising the steps performed by the Multi-cell/multicast Coordination Entity of the first aspect, or the steps performed by the Mobility Management Entity MME of the second aspect.

Some embodiments of apparatus and/or methods in accordance with embodiments of the present invention are now described, by way of example only, and with reference to the accompanying drawings, in which:
- Figure 1 is intended to recall two examples of architectures for MBMS in EPS,
- Figure 2 is intended to illustrate the concepts of MBSFN area and of MBMS Service Area in a mobile network, to simplify based on an example,
- Figure 3 is intended to provide an overview of an MBSFN area reconfiguration procedure according to an embodiment of the invention called Solution 1/Option A,
- Figure 4 is intended to provide an overview of an MBSFN area reconfiguration procedure according to an embodiment of the invention called Solution 1/Option B,
- Figure 5 is intended to provide an overview of an MBSFN area reconfiguration procedure according to an embodiment of the invention called Solution 2/Option A,
- Figure 6 is intended to provide an overview of an MBSFN area reconfiguration procedure according to an embodiment of the invention called Solution 2/Option B,
- Figure 7 is intended to illustrate in a simplified way an example case of interaction between an MBSFN area reconfiguration procedure and an MCE start or restart, according to an embodiment of the invention called MCE start or restart/case 1,
- Figure 8 is intended to illustrate in a simplified way an example case of interaction between an MBSFN area reconfiguration procedure and an MCE start or restart, according to an embodiment of the invention called MCE start or restart/case 2,
- Figure 9 is intended to illustrate in a simplified way an example case of interaction between an MBSFN area reconfiguration procedure, and a recovery after M3 path failure, according to an embodiment of the invention called M3 path failure/case 1,
- Figure 10 is intended to illustrate in a simplified way an example case of interaction between an MBSFN area reconfiguration procedure, and a recovery after M3 path failure, according to an embodiment of the invention called M3 path failure/case 2.

Various embodiments and/or aspects of the present invention will be more detailed in the following, by way of example for MBMS in EPS. However it should be understood that the present invention is not limited to EPS, and could apply as well to support of multimedia broadcast/multicast services in 3GPP systems other than EPS or in systems specified by standardization bodies other than 3GPP.

Embodiments of the present invention will be more detailed in the following, by way of example for the case of a distributed MCE architecture. However it should be understood that the present invention is not limited to such architecture.

MBMS for LTE relies on the concept of:
- MBSFN Areas which consist of a set of eNBs that are capable to perform MBSFN transmission, i.e. transmit exactly the same content synchronously;
- MBMS Service Area Identities, which define elementary geographical area(s) in which an MBMS session can be broadcast;

MMEs are provisioned with the knowledge of the Service Area Identities (SAIs) each MCE supports, either by local provisioning in the MME or via the MCE-initiated M3 Setup procedure.

MCEs are provisioned with the MBSFN Areas they control. For each MBSFN Area, the operator further provisions in the MCE the SAI(s) associated to the MBSFN Area.

Operators should be able to reconfigure their MBSFN Area(s) without interrupting all the MBMS sessions in the reconfigured areas, specifically:
- associate new Service Area(s) to an existing MBSFN Area;
- remove Service Area(s) from an existing MBSFN Area;
- modify other parameters applicable to the entire MBSFN Area (such as sub-frames allowed for MBMS, sub-frames forbidden to MBMS because e.g. of sub-frames reserved for elCIC (ABS sub-frames))
- or any combination of the above operations.

Such a reconfiguration may affect the MBMS session(s) being scheduled in the MBSFN Area, i.e.
- the addition of new SA(s) to an MBSFN Area may require to start MBMS session(s) distributed in these SA(s) in the MBSFN Area;
- the removal of SA(s) from an MBSFN Area may require to stop MBMS session(s) (distributed in these SA(s)) in this MBSFN Area;
- any of the above operations may lead the MCE to update the MBMS radio scheduling of all the MBMS sessions in the MBSFN Area.

It is essential for the consistency of all MBMS services in the entire MBSFN Area that any such update of the MBMS radio scheduling is done synchronously and consistently by all the MCEs participating to the MBSFN Area. This is particularly important for deployment with a distributed MCE architecture.

It is currently undefined how such reconfiguration should be processed. 3GPP has defined a M3AP MCE Configuration Update procedure in 3GPP Rel-11, but without providing further details on the MCE and MME behaviour, or guidance on how to maintain the consistency of MBMS services throughout MBSFN Areas, or guidance on how to release M3AP resources for MBMS sessions that need to be terminated as a result of the reconfiguration.

Today the operator can only do off line modification of MBSFN areas configuration updates. This means that if any of the removed/added SAI(s) is involved in at least one ongoing MBMS session delivery, the broadcast of all MBMS sessions involving those SAI(s) must first be stopped to allow the reconfiguration to take place and then restarted once the reconfiguration has been done.

Embodiments of the invention in particular enable to avoid such drawbacks.

Embodiments of the invention provide that MBSFN Area reconfiguration operations are applied synchronously in all the MCEs throughout the MBSFN area, at a precise time configured by RAN O&M in all MCE(s) - further noted as T_{recfg}.

A first embodiment may comprise part or all of following steps.

Prior to the occurrence of the reconfiguration time T_{recfg} (e.g. few minutes beforehand), the MCE informs the MME about the new SA(s) that it starts now supporting, using the M3AP MCE Configuration Update procedure. This enables the MME to update its knowledge of the SAI(s) supported by the MCE and to possibly start the distribution of existing MBMS sessions in that MCE, if necessary. An MCE that receives an MBMS Session Start Request for a SAI that is being added to the MBSFN Area defers the start of that MBMS session in the MBSFN Area until the time T_{recfg} of the reconfiguration.

At the occurrence of the time T_{recfg}, each MCE pertaining to the same MBSFN Area re-schedules the MBMS sessions to be scheduled in the MBSFN Area, considering the SAI(s) that are added or stopped, and the MBMS Session Start Requests that have been received prior to the reconfiguration. The MCE stops broadcasting MBMS sessions that no longer need to be broadcast in the relevant MBSFN area. The MCE can maintain the related M3AP resources until receiving later on an MBMS Session Stop from the MME as a first option (A), or, an alternative option (B) is to have MCE check itself that the session stopped is no more involved in any other MBSFN areas under its control and let it remove locally the MBMS Session Context itself without an MBMS Session Stop message being received from the MME.

After the occurrence of the reconfiguration (i.e. T_{recfg}), the MCE notifies the MME about the SAI(s) that it has now stopped to support, using the M3AP MCE Configuration Update procedure. This enables the MME to update its knowledge of the SAI(s) no longer supported by the MCE. If the MME detects that an MBMS session can be stopped, it can then send an MBMS Session Stop message (option A) or immediately remove the MBMS Session Context locally (option B).

A second embodiment may comprise part or all of following steps.

The MCE may send the MCE Configuration Update message to the MME always before the time T_{recfg} for both cases of SAI(s) being added and/or SAI(s) being removed. It signals the time T_{recfg} to the MME in a new 'MCE Configuration Update Time' IE within the M3AP MCE Configuration Update message. In that case,
- whenever the MME detects that an MBMS session needs to be stopped in relation with a SAI removed it sends an MBMS Session Stop message, and it sets the 'Time of MBMS Data Stop' IE to the time T_{recfg} in that MBMS Session Stop message sent to the MCE as a result of the MCE reconfiguration as a first option (A), or, an alternative option (B) is to have MME to release locally the M3AP resources at the occurrence of this time T_{recfg} (the MCE locally releases the session context);
- whenever the MME detects that an MBMS Session Start message must be sent to the MCE(s) in control of the MBSFN area in relation with a SAI added, the MME adds a new 'MCE Configuration Update Time' IE in the MBMS Session Start requests sent to the MCE as a result of the MCE reconfiguration which corresponds to the time T_{recfg} received from the MCE and it includes in the existing 'Time of MBMS Data Start' IE the start time originally received for the session start from the BM-SC.
Note: the MME shall send the 'Time of MBMS Data Start' IE as received from the BM-SC, as this is used by MCEs in a distributed MCE architecture to compute the updated MBMS radio scheduling of all the MBMS sessions in the MBSFN area. This new updated scheduling takes place at the time contained in the new 'MCE Configuration Update Time' IE if present, otherwise at the time contained in the 'Time of MBMS Data Start' IE.

The second embodiment allows triggering the M3AP MCE Configuration Update procedure only once (instead of two in the first embodiment) in reconfiguration scenarios with concurrent addition and removal of SA(s). It requires however more impact on the M3AP interface.

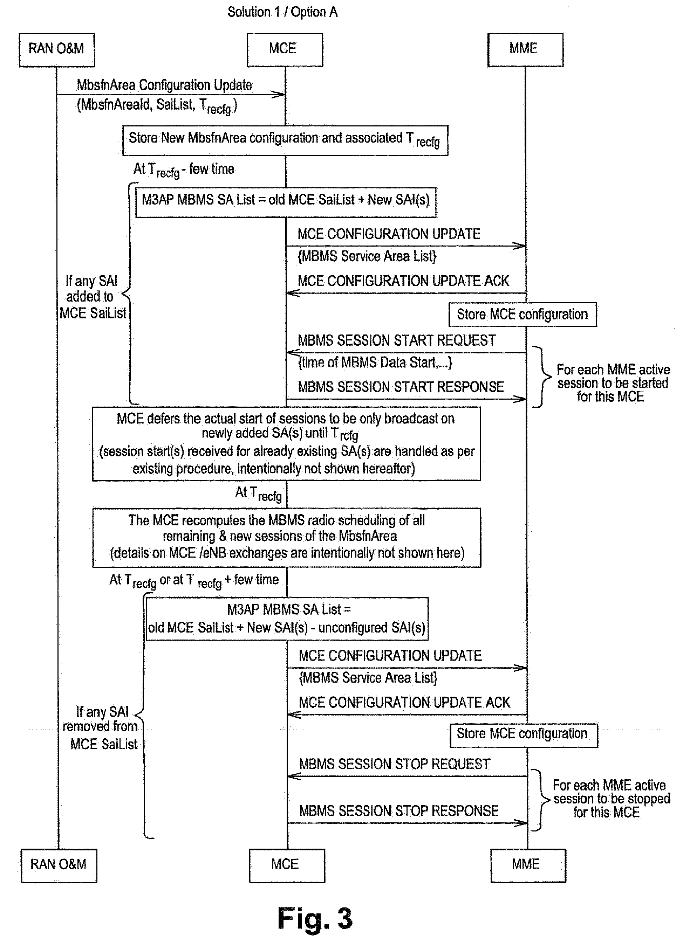

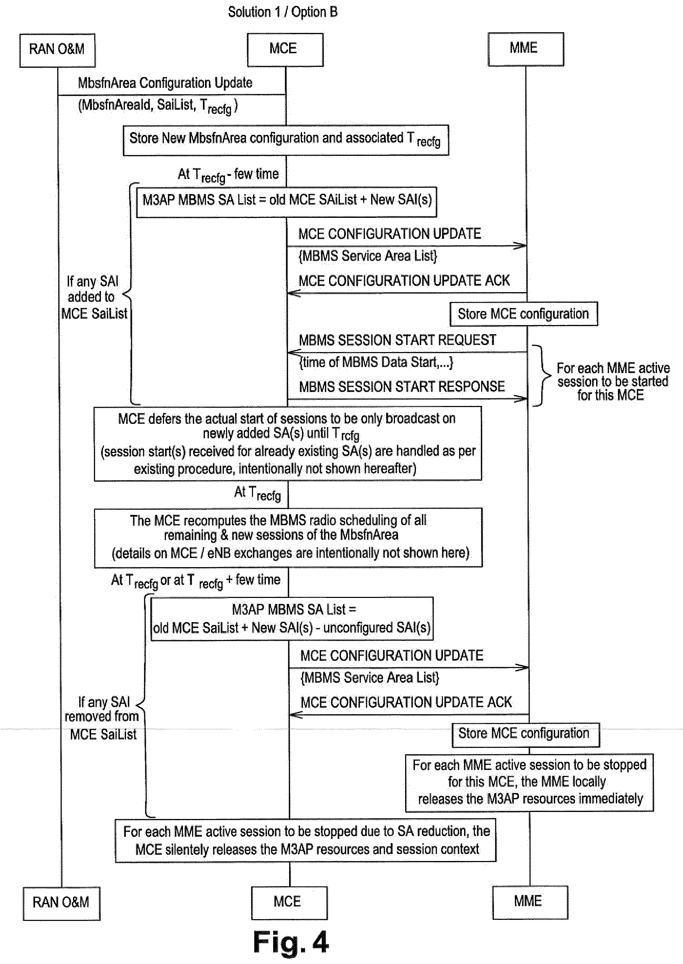

The first embodiment may comprise part or all of following steps described hereafter as "Solution-1" (with two Options called "Option A" and "Option B"). An overview of "Solution 1/Option A" is shown in figure 3. An overview of "Solution 1/Option B" is shown in figure 4.

### Solution-1

- The operator indicates by RAN O&M at which time the update of an MbsfnArea configuration should apply:
   ∘ The operator sets the parameter T_{recfg} (expressed e.g. as an UTC time) indicating at which absolute time the update of an MbsfnArea configuration should apply (one or several MbsfnArea parameters may have to be updated at the same absolute time)
      ▪ This process is per MbsfnArea, i.e. the operator is allowed to launch concurrently (without any constraint) several MbsfnArea configuration updates each of them related to different MbsfnAreas;
      ▪ Several deferred MbsfnArea configuration updates might be as well concurrently scheduled for the same MbsfnArea. The MCE ensures that the set of scheduled updates do not lead to apply cell configuration update at a frequency higher than what can be supported by the LTE radio interface (it mainly depends on the value of the MCCH modification period configured for the MbsfnArea).
- If one or more SAI is added to an MbsfnArea,
   ∘ If the MCE determines that the added SAI(s) aren't already configured for other MbsfnArea(s) it controls, the MCE updates its List of SAI(s) and provides this updated list to the MME via the MCE Configuration Update procedure. The MME has to be informed of the update (SA extensions) some time* before the absolute time indicated in T_{recfg} .
      ▪ (*) The MME has to be informed early enough, to let sufficient time to the MME to start existing MBMS sessions in that MCE, if necessary, before the reconfiguration is applied (T_{recfg}). This also allows the eNB to be informed early enough to allow (if necessary) a smooth offload of the cell(s) affected by the MBMS traffic increase.
      ▪ Note: The update of the SAI list of an MBSFN area does not lead to the need to update the MME if the SAI was already supported by the MCE for another MBSFN Area (i.e. the SAI list of the MCE is not affected).
   ∘ The MME stores the new MCE SAI(s) List in its context and answers to the MCE via use of the message MCE Configuration Update Ack.
   ∘ Then, the MME checks whether some sessions should be started in this MCE.
   ∘ For each MBMS session to be started, the MME initiates an MBMS Session Start procedure towards that MCE
   ∘ Upon reception of any subsequent MBMS Session Start Request message, the MCE checks whether this request corresponds to a SA that is already activated in the MBSFN area or a SA that is scheduled to be activated at T_{recfg}. In the latter case, i.e. if the MBMS session applies to an SA that is being added to the MBSFN Area, and does not include any other SA from the MCE SAI List already in use in the MBSFN Area, the MCE defers the start of the session until the reconfiguration is applied (T_{recfg});
      ▪ Note: the MBMS Session Start request message should include the time provided by the BM-SC, and thus likely an absolute time to start in the past.
   ∘ If it is a request that may have been triggered due to the MCE Configuration Update, the MCE determines the McchUpdateTime for this new session based on the absolute time indicated in T_{recfg}
   ∘ Otherwise the MCE determines the McchUpdateTime based on the UTC time indicated in the IE 'Time of MBMS Data Transfer'
   ∘ The MCE recomputes the MBMS radio scheduling of all MBMS sessions (existing and new sessions to be started) of the MbsfnArea for the target McchUpdateTime.
- If one or more SAI is removed from an MbsfnArea,
   ∘ The MCE checks whether some sessions should be stopped in this MbsfnArea at the time T_{recfg}.
   ∘ If at least one session is to be stopped in this MbsfnArea,
      ▪ the MCE determines the McchUpdateTime based on the time indicated in T_{recfg};
      ▪ the MCE then recomputes the MBMS radio scheduling of all remaining sessions of the MbsfnArea after the reconfiguration, i.e. which will be applicable at the McchUpdateTime.
   ∘ If the MCE determines that the removed SAI(s) aren't configured for other MbsfnArea(s) controlled by the MCE, the MCE removes the SAI(s) from its List of SAI(s) and provides this updated list to the MME via the MCE Configuration Update procedure at or after the occurrence of T_{recfg}.
      ▪ Note: The update of the SAI list of an MBSFN area does not lead to the need to update the MME if the SAI(s) to remove remains configured in the MCE for another MBSFN Area (i.e. the SAI list of the MCE is not affected).
   ∘ Upon receipt of this message, the MME checks whether some sessions should be stopped in this MCE.
   ∘ For each MBMS session to stop in that MCE, the MME initiates an MBMS Session Stop procedure to release the associated M3AP resources in the MCE and MME (option A) or only release locally and immediately its M3AP resources (option B);
   ∘ For each received MBMS Session Stop Request message (option A), the MCE responds to the MME with a MBMS Session Stop Response message and releases the associated M3AP resources; the MCE releases locally its M3AP resources (option B).
   Option B allows minimizing the exchanges of messages over M3 interface.
- In case both one or more SAI is removed from an MbsfnArea and one or more SAI is added to the same MbsfnArea
   ∘ The MCE and MME behave as specified above for the case of SA extensions and the case of SA removals. This leads the MCE to send an MCE Configuration Update adding SAI(s) before T_{recfg} and another MCE Configuration Update removing SAI(s) at or after T_{recfg}.

If the reconfiguration operation does not add nor remove SA(s) but only modifies other parameters applicable to the entire MBSFN Area, each MCE applies its reconfiguration at the time T_{recfg} . No MCE Configuration Update procedure takes place towards the MME in this case.

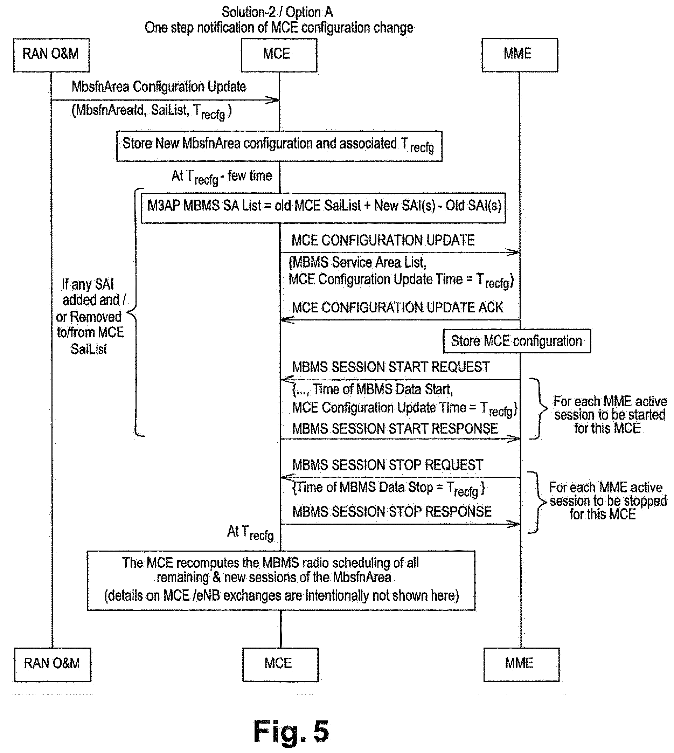

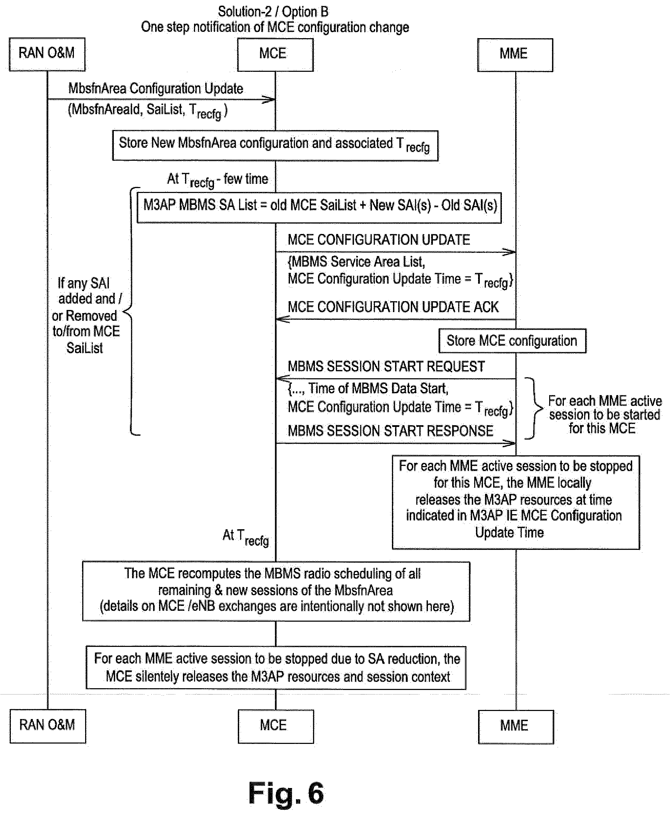

The second embodiment may comprise part or all of following steps described hereafter as "Sotution-2" (with two Options called "Option A" and "Option B"). An overview of "Solution 2/Option A" is shown in figure 5. An overview of "Solution 2/Option B" is shown in figure 6.

### Solution-2

- The operator indicates at which time the update of an MbsfnArea configuration should apply
   ∘ Idem solution-1
- If one or more SAI is removed from an MbsfnArea,
   ∘ If the MCE determines that the removed SAI(s) aren't configured for other MbsfnArea(s) controlled by the MCE, the MCE removes the SAI(s) from its List of SAI(s) and provides this updated list and a new 'MCEConfigurationUpdateTime' IE (set to T_{recfg}) to the MME via the MCE Configuration Update procedure. The MME has to be informed of the update some time* before the absolute time indicated in the 'MCEConfigurationUpdateTime' IE.
      ▪ (*) The MME has to be informed early enough, to let sufficient time to the MME to stop the MBMS sessions affected by the SAI(s) removal in that MCE, if any, before the reconfiguration is to be applied (T_{recfg}). As a defensive action , the MCE would anyway release the resources for the sessions to be stopped at MCCH Update Time determined based on T_{recfg} in case the session stops would be lately received.
   ∘ For each MBMS session to stop in that MCE, the MME initiates an MBMS Session Stop procedure (with IE 'Time of MBMS Data Stop' set to the time previously received in the 'MCEConfigurationUpdateTime' IE in the MCE Configuration Update message) to release the associated M3AP resources in the MCE and MME (option A) or only release locally its M3AP resources at the occurrence of the reconfiguration time T_{recfg} (option B)
   ∘ For each received MBMS Session Stop Request message (option A), the MCE processes the session stop as usual*; the MCE releases locally its M3AP resources (option B).
      ▪ (*) If the MBMS Session Stop Request message would be received after T_{recfg}, the only MCE action would be to release the M3AP resources and session context and positively answer to the MME.
      Option B allows further minimizing of messages exchanges over M3 interface.
- If one or more SAI is added to an MbsfnArea,
   ∘ If the MCE determines that the added SAI(s) aren't already configured for other MbsfnArea(s) it controls, the MCE updates its List of SAI(s) and provides this updated list and a new 'MCEConfigurationUpdateTime' IE (set to T_{recfg}) to the MME via the MCE Configuration Update procedure. The MME has to be informed of the update (SA extensions) some time* before the absolute time indicated in T_{recfg}.
      ▪ (*) The MME has to be informed early enough, to let sufficient time to the MME to start existing MBMS sessions in that MCE, if necessary, before the reconfiguration is applied (T_{recfg}). This also allows) the eNB to be informed early enough to allow (if necessary) a smooth offload of the cell(s) affected by the MBMS traffic increase.
   ∘ The MME stores the new MCE SAI(s) List in its context and answers to the MCE via use of the message MCE Configuration Update Ack.
   ∘ Then, the MME checks whether some sessions should be started in this MCE.
   ∘ For each MBMS session to be started, the MME initiates an MBMS Session Start procedure towards that MCE (the MME includes a new 'MCEConfigurationUpdateTime' IE in the MBMS Session Start message set to the time previously received in the 'MCEConfigurationUpdateTime' IE in the MCE Configuration Update message)
   ∘ Upon reception of an MBMS Session Start Request message, the MCE processes the session start as usual with the exception that it has to use the time indicated in the new M3AP 'MCEConfigurationUpdateTime' IE to determine the McchUpdateTime
      ▪ Note: the IE 'Time of MBMS Data Start' is still used to determine the session ranking when recomputing the MBMS radio scheduling of all remaining sessions of the MbsfnArea.
- In case both one or more SAI is removed from an MbsfnArea and one or more SAI is added to the same MbsfnArea
   ∘ The MCE and MME behave as specified above for the case of SA extensions and the case of SA removals.
- If the reconfiguration operation does not add nor remove SA(s) but only modifies other parameters applicable to the entire MBSFN Area:
   ∘ Idem solution-1

As indicated above, the second embodiment allows triggering the M3AP MCE Configuration Update procedure only once (instead of two in the first embodiment) in reconfiguration scenarios with concurrent addition and removal of SA(s). It requires however more impact on the M3AP interface.

Option B (in either embodiment) allows minimizing the exchanges of messages over the M3 interface, compared to Option A.

Other embodiments for such MBSFN area reconfiguration process could of course be envisaged, with various impact on the M3 interface and/or various impact on the MCE and/or the MME, as understood by the skilled person.

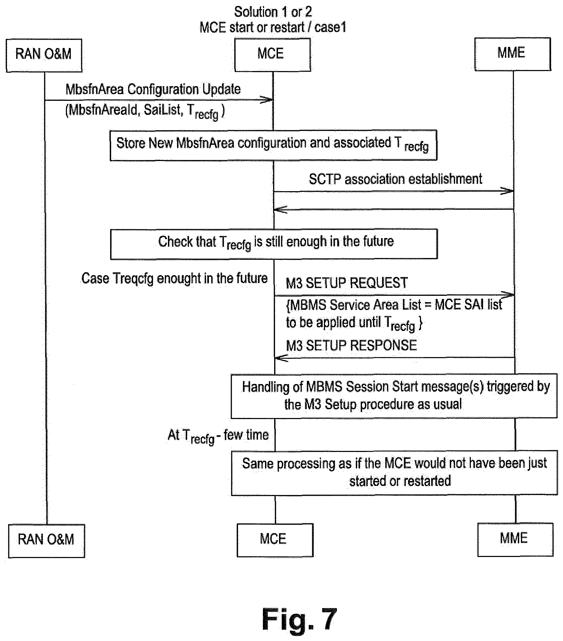

Such MBSFN area reconfiguration process can also be used in case of MCE start or restart, or in case of recovery after M3 path failure, as will now be described in connection with figures 7 to 10. In such cases, some modifications of the MBSFN area reconfiguration process, compared to embodiments considered above (e.g. in connection with figures 3 to 6) may be needed due to interaction with procedures such as the M3 Setup procedure or restoration procedures used in such cases.

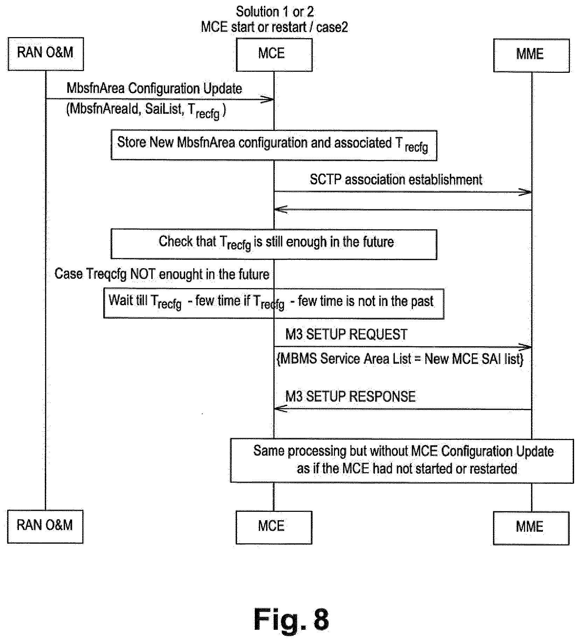

Examples of interaction between MBSFN area reconfiguration, and MCE start or restart, are illustrated in a simplified way in figures 7 and 8.

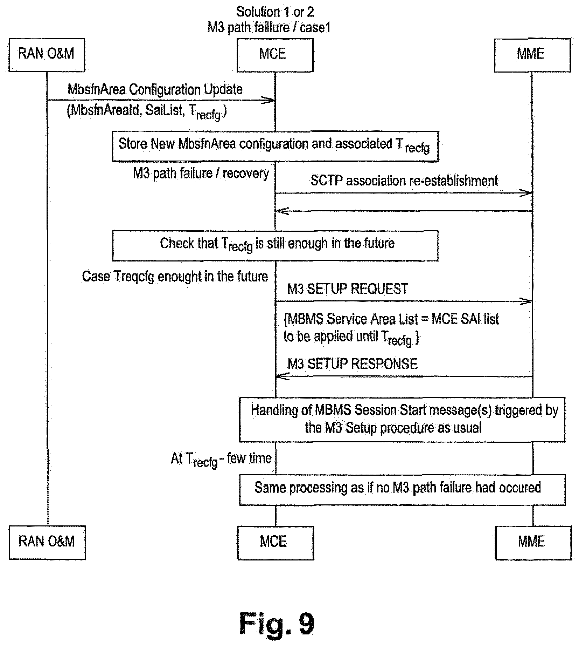

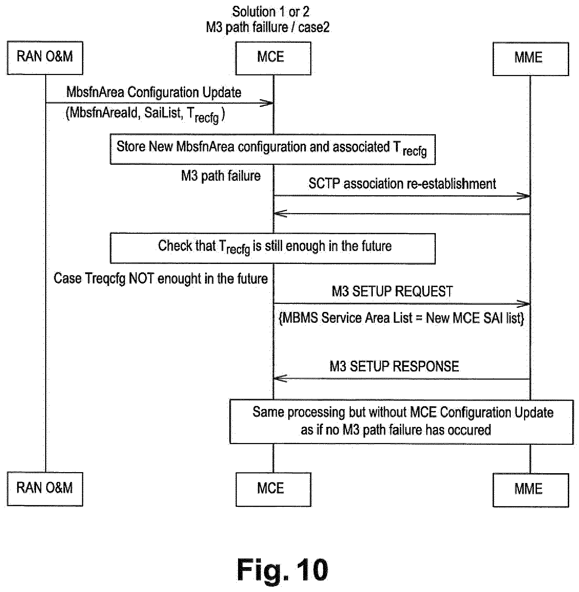

Examples of interaction between MBSFN area reconfiguration, and recovery after M3 path failure, are illustrated in a simplified way in figures 9 and 10.

T_{recfg} is the target UTC time at which the deferred configuration update should apply (T_{recfg} is indicated via a dedicated parameter along with Mbsfn Area configuration parameter(s) to be updated).

It may happen that T_{recfg} is already either in the past or very near to the current time when the MCE (re)starts or when the M3AP path recovers(e.g. because of a MCE outage after the time at which the deferred configuration has been received by the MCE). Figures 8 & 10 illustrate how the MCE should behave in such cases especially regarding the MME.

"Case T_{recfg} enough in the future" - Case 1 (fig 7 & 9)
- This case illustrates how the MCE shall behave either after a MCE start/restart or a M3 path recovery when T_{recfg} is enough far in the future compared to the time at which the eNB/MCE start/restart is completed or the time at which the M3 path recovers.
   "Case T_{recfg} not enough in the future" - Case 2 (fig 8 & 10)
- This case illustrates how the MCE shall behave either after a MCE start/restart or a M3 path recovery when T_{recfg} is NOT enough far in the future compared to the time at which the eNB/MCE start/restart is completed or the time at which the M3 path recovers.

The process illustrated in figures 7 and 8 starts with configuring the MCE with MBSFN area reconfiguration information and associated T_{recfg}, establishing an SCTP association between MCE and MME (upon MCE start or restart), and checking if T_{recfg} is still enough in the future.

If T_{recfg} is enough in the future, as illustrated in figure 7, the process continues with a M3 Setup procedure, whereby the MME is informed of the MBMS Service Area List to be applied until T_{recfg}. The process then continues with a restoration procedure whereby MBMS Session Start messages are triggered by the M3 Setup procedure and handled. Then, at T_{recfg} - few time, the process continues as in embodiments considered above (e.g. in connection with figures 3 to 6), as if the MCE would not have just started or restarted.

If T_{recfg} is not enough in the future, as illustrated in figure 8, the process continues with waiting till Trecfg - few time (if Trecfg - few time is not in the past) to perform a M3 Setup procedure, whereby the MME is informed of the MBMS Service Area List. The process then continues as in embodiments considered above (e.g. in connection with figures 3 to 6), as if the MCE would not have just started or restarted, but without MCE Configuration Update.

The process illustrated in figures 9 and 10 starts with configuring the MCE with MBSFN area reconfiguration information and associated T_{recfg}, re-establishing an SCTP association between MCE and MME (upon recovery after M3 path failure), and checking if T_{recfg} is still enough in the future.

If T_{recfg} is enough in the future, as illustrated in figure 9, the process continues with a M3 Setup procedure, whereby the MME is informed of the MBMS Service Area List to be applied until T_{recfg}. The process then continues with a restoration procedure whereby MBMS Session Start messages are triggered by the M3 Setup procedure and handled. Then, at T_{recfg} - few time, the process continues as in embodiments considered above (e.g. in connection with figures 3 to 6), as if no M3 path failure had occurred.

If T_{recfg} is not enough in the future, as illustrated in figure 10, the process continues with waiting till T_{recfg} - few time (if T_{recfg} - few time is not in the past) to perform a M3 Setup procedure, whereby the MME is informed of the MBMS Service Area List. The process then continues as in embodiments considered above (e.g. in connection with figures 3 to 6), as if no M3 path failure had occurred, but without MCE Configuration Update.

Embodiments of the invention enable the operator to dynamically reconfigure its MBSFN Area(s) (e.g. add or remove MBMS SA(s) to/from an MBSFN Area) without interrupting the broadcast of on-going MBMS session(s). This ensures in particular a tight synchronization of the MBSFN area reconfiguration and start/stop of the affected MBMS sessions throughout the MBSFN Area (across MCEs for MBMS deployment with a distributed MCE architecture).

Whenever the operator wants to reconfigure its MBSFN Area(s) (e.g. add or remove MBMS SA(s) to/from an MBSFN Area), he can do it without the need to wait for the end of on-going MBMS session(s) or the need to interrupt those sessions. This is particularly useful for long lasting or permanent sessions (e.g. TV broadcast) that are supposed to be rarely stopped or interrupted.

In one example, there is a provided a method for MBSFN area reconfiguration in a mobile network wherein an MBSFN area is controlled by a set of Multi-cell/multicast Coordination Entities MCEs.

In an example, said method includes:
- performing a MBSFN area reconfiguration procedure, wherein a reconfiguration of said MBSFN area is applied synchronously in said MCEs, at a time referred to as reconfiguration time configured in said MCEs.

In other examples, various entities of a mobile network are provided for carrying out such method, said entities including, in particular (though not exclusively), Multi-cell/multicast Coordination Entity MCE, Mobility Management Entity MME.

In one example, there is provided a Multi-cell/multicast Coordination Entity MCE of a mobile network wherein an MBSFN area is controlled by a set of MCEs, said MCE controlled by a Mobility Management Entity MME.

Various examples may be provided for such MCE.

In an example, said MCE is adapted to:
- perform a MBSFN area reconfiguration procedure, wherein a reconfiguration of said MBSFN area is applied synchronously in said MCEs, at a time referred to as reconfiguration time configured in said MCEs.

In another example, said MCE is adapted to:
- send MCE reconfiguration update information to said MME informing said MME of any SAI added to the MCE or any SAI removed from MCE when performing an MBSFN area reconfiguration;
- receive from said MME a MBMS Session Start Request for any MBMS session in any SAI added to the MCE per said MBSFN area reconfiguration and/or a MBMS Session Stop Request for any MBMS session in any SAI removed from the MCE per said MBSFN area reconfiguration.

Various examples may be provided for such MCE, which may be used alone or in combination, according to various combinations.

In an example, the MCE is adapted to:
- upon occurrence of a reconfiguration time, configured in said MCEs and at which reconfiguration of said MBSFN area should be applied synchronously in said MCEs, re-schedule MBMS sessions in said MBSFN area, taking into account radio parameters modified for the MBSFN area if any, starting MBMS sessions to be started in any SAI added per said MBSFN area reconfiguration and stopping MBMS sessions to be stopped in any SAI removed per said MBSFN area reconfiguration.

In an example, the MCE is adapted to:
- prior to the occurrence of a reconfiguration time, configured in said MCEs and at which reconfiguration of said MBSFN area should be applied synchronously in said MCEs, send MCE reconfiguration update information to said MME including any SAI added to the MCE per said MBSFN area reconfiguration.

In an example, the MCE is adapted to:
- defer until a reconfiguration time, configured in said MCEs and at which reconfiguration of said MBSFN area should be applied synchronously in said MCEs, the start of any MBMS session requested to be started by the MME via an MBMS Session Start Request in any SAI added to the MCE per said MBSFN area reconfiguration.

In an example, the MCE is adapted to:
- use a reconfiguration time, configured in said MCEs and at which reconfiguration of said MBSFN area should be applied synchronously in said MCEs, to determine a MCCH Update Time for any MBMS session requested to be started by the MME via an MBMS Session Start Request in any SAI added to the MCE per said MBSFN area reconfiguration.

In an example, the MCE is adapted to:
- after the occurrence of a reconfiguration time, configured in said MCEs and at which reconfiguration of said MBSFN area should be applied synchronously in said MCEs, send MCE reconfiguration update information to said MME informing
   said MME of any SAI that said MCE has stopped supporting in the MCE per said MBSFN area reconfiguration.

In an example, the MCE is adapted to:
- maintain MBMS session control resources for the M3AP interface for any MBMS session in any SAI removed per said MBSFN area reconfiguration, until receiving from the MME a corresponding MBMS Session Stop Request.

In an example, the MCE is adapted to:
- maintain MBMS session control resources for the M3AP interface for any MBMS session in any SAI removed per said MBSFN area reconfiguration, and check if any MBMS session in any SAI removed per said MBSFN area reconfiguration is not involved in any other MBSFN area controlled by said MCE, and if yes release locally corresponding MBMS session control resources.

In an example, the MCE is adapted to:
- prior to the occurrence of a reconfiguration time, configured in said MCEs and at which reconfiguration of said MBSFN area should be applied synchronously in said MCEs, send MCE reconfiguration update information to said MME informing said MME of any SAI added to or removed from the MCE per said MBSFN area reconfiguration, with said reconfiguration time.

In an example, the MCE is adapted to:
- use a MCE reconfiguration update time indicated in a MBMS Session Start Request received from the MME to determine a MCCH Update Time for MBMS sessions requested to be started by the MME in any SAI added to the MCE per said MBSFN area reconfiguration.

In another example there is provided a Mobility Management MME of a mobile network wherein an MBSFN area is controlled by a set of Multi-cell/multicast Coordination Entities MCEs, said MME controlling at least one of said MCEs.

Various examples may be provided, which may be used alone or in combination, according to various combinations.

In an example, said MME is adapted to:
- upon reception from said MCE of MCE reconfiguration information informing said MME of any SAI added or removed to the MCE per said MBSFN area reconfiguration, send to said MCE a MBMS Session Start Request for any MBMS session in any SAI added to the MCE in the MCE reconfiguration information received from said MCE and/or a MBMS Session Stop Request for any MBMS session in any SAI removed from the MCE in the MCE reconfiguration information received from said MCE.

In an example, said MME is adapted to:
- receive MCE reconfiguration information including a reconfiguration time from said MCE.

In an example, said MME is adapted to:
- send to said MCE a MBMS Session Stop Request including a Time of MBMS Data Stop Information Element set to said reconfiguration time, for any MBMS session in any SAI removed from the MCE in the MCE reconfiguration information received from said MCE.

In an example, said MME is adapted to:
- release locally MBMS session control resources for the M3AP interface for any MBMS session in any SAI removed from the MCE in the MCE reconfiguration information received from said MCE.

In an example, said MME is adapted to:
- send to said MCE a MBMS Session Start Request indicating a MCE reconfiguration update time, for MBMS sessions to be requested to be started in any added SAI to the MCE in the MCE reconfiguration information received from said MCE.

In another example, there is provided a method for MBSFN area reconfiguration in a mobile network wherein an MBSFN area is controlled by a set of Multi-cell/multicast Coordination Entities MCEs, said method comprising at least one of the steps performed by such MCE or MME.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A Multi-cell/multicast Coordination Entity MCE of a mobile network wherein a Multimedia Broadcast multicast service Single Frequency Network MBSFN area is controlled by a set of MCEs, said MCE controlled by a Mobility Management Entity MME, said MCE adapted to:
- send MCE reconfiguration update information to said MME informing said MME of any Service Area Identity SAI added to the MCE or any SAI removed from MCE when performing an MBSFN area reconfiguration;
- receive from said MME a MBMS Session Start Request for any MBMS session in any SAI added to the MCE per said MBSFN area reconfiguration and/or a MBMS Session Stop Request for any MBMS session in any SAI removed from the MCE per said MBSFN area reconfiguration.

2. An MCE according to claim 1, adapted to:
- upon occurrence of a reconfiguration time, configured in said MCEs and at which reconfiguration of said MBSFN area should be applied synchronously in said MCEs, re-schedule MBMS sessions in said MBSFN area, taking into account radio parameters modified for the MBSFN area if any, starting MBMS sessions to be started in any SAI added per said MBSFN area reconfiguration and stopping MBMS sessions to be stopped in any SAI removed per said MBSFN area reconfiguration.

3. An MCE according to any of claims 1 to 2, adapted to:
- prior to the occurrence of a reconfiguration time, configured in said MCEs and at which reconfiguration of said MBSFN area should be applied synchronously in said MCEs, send MCE reconfiguration update information to said MME including any SAI added to the MCE per said MBSFN area reconfiguration.

4. An MCE according to any of claims 1 to 3, adapted to:
- defer until a reconfiguration time, configured in said MCEs and at which reconfiguration of said MBSFN area should be applied synchronously in said MCEs, the start of any MBMS session requested to be started by the MME via an MBMS Session Start Request in any SAI added to the MCE per said MBSFN area reconfiguration.

5. An MCE according to any of claims 1 to 4, adapted to:
- use a reconfiguration time, configured in said MCEs and at which reconfiguration of said MBSFN area should be applied synchronously in said MCEs, to determine a MCCH Update Time for any MBMS session requested to be started by the MME via an MBMS Session Start Request in any SAI added to the MCE per said MBSFN area reconfiguration.

6. An MCE according to any of claims 1 to 5, adapted to:
- after the occurrence of a reconfiguration time, configured in said MCEs and at which reconfiguration of said MBSFN area should be applied synchronously in said MCEs, send MCE reconfiguration update information to said MME informing said MME of any SAI that said MCE has stopped supporting in the MCE per said MBSFN area reconfiguration.

7. An MCE according to any of claims 1 to 6, adapted to:
- maintain MBMS session control resources for the M3AP interface for any MBMS session in any SAI removed per said MBSFN area reconfiguration, until receiving from the MME a corresponding MBMS Session Stop Request.

8. An MCE according to any of claims 1 to 6, adapted to:
- maintain MBMS session control resources for the M3AP interface for any MBMS session in any SAI removed per said MBSFN area reconfiguration, and check if any MBMS session in any SAI removed per said MBSFN area reconfiguration is not involved in any other MBSFN area controlled by said MCE, and if yes release locally corresponding MBMS session control resources.

9. An MCE according to any of claims 1 to 2, adapted to:
- prior to the occurrence of a reconfiguration time, configured in said MCEs and at which reconfiguration of said MBSFN area should be applied synchronously in said MCEs, send MCE reconfiguration update information to said MME informing
said MME of any SAI added to or removed from the MCE per said MBSFN area reconfiguration, with said reconfiguration time.

10. An MCE according to claim9, adapted to:
- use a MCE reconfiguration update time indicated in a MBMS Session Start Request received from the MME to determine a MCCH Update Time for MBMS sessions requested to be started by the MME in any SAI added to the MCE per said MBSFN area reconfiguration.

11. A Mobility Management Entity MME of a mobile network wherein a Multimedia Broadcast multicast service Single Frequency Network MBSFN area is controlled by a set of Multi-cell/multicast Coordination Entities MCEs, said MME controlling at least one of said MCEs, said MME adapted to:
- upon reception from said MCE of MCE reconfiguration information informing said MME of any Service Area Identity SAI added or removed to the MCE per an MBSFN area reconfiguration, send to said MCE a MBMS Session Start Request for any MBMS session in any SAI added to the MCE in the MCE reconfiguration information received from said MCE and/or a MBMS Session Stop Request for any MBMS session in any SAI removed from the MCE in the MCE reconfiguration information received from said MCE.

12. A MME according to claim 11, adapted to:
- receive MCE reconfiguration information including a reconfiguration time from said MCE.

13. A MME according to claim 12, adapted to:
- send to said MCE a MBMS Session Stop Request including a Time of MBMS Data Stop Information Element set to said reconfiguration time, for any MBMS session in any SAI removed from the MCE in the MCE reconfiguration information received from said MCE.

14. A MME according to claim 11, adapted to:
- release locally MBMS session control resources for the M3AP interface for any MBMS session in any SAI removed from the MCE in the MCE reconfiguration information received from said MCE.

15. A MME according to any of claims 12 to 14, adapted to:
- send to said MCE a MBMS Session Start Request indicating a MCE reconfiguration update time, for MBMS sessions to be requested to be started in any added SAI to the MCE in the MCE reconfiguration information received from said MCE.

16. A method for Multimedia Broadcast multicast service Single Frequency Network MBSFN area reconfiguration in a mobile network wherein an MBSFN area is controlled by a set of Multi-cell/multicast Coordination Entities MCEs, said method comprising the steps performed by a Multi-cell/multicast Coordination Entity MCE according to any of claims 1 to 10, or the steps performed by a Mobility Management Entity MME according to any of claims 11 to 15.

## Patentansprüche

1. Mehrzellen-/Multicast-Koordinationsentität MCE eines mobilen Netzwerks, wobei ein Multimedia-Broadcast/Multicast-Dienst-Einzelfrequenznetzwerk-MBSFN-Bereich durch eine Gruppe von MCEs gesteuert wird, wobei die besagte MCE durch eine Mobilitätsmanagemententität MME gesteuert wird, wobei die besagte MCE angepasst ist zum:
- Senden von MCE-Neukonfigurations-Aktualisierungsinformationen an die besagte MME, welche die besagte MME über jegliche Dienstbereichsidentität SAI informieren, die zur MCE hinzugefügt wird, oder jegliche SAI, die aus der MCE entfernt wird, wenn eine MBSFN-Bereich-Neukonfiguration durchgeführt wird;
- Empfangen, von der besagten MME, einer MBMS-Sitzungsstartanfrage für jegliche MBMS-Sitzung in jeglicher SAI, die zur MCE pro besagte MBSFN-Bereich-Neukonfiguration hinzugefügt wird, und/oder einer MBMS-Sitzungsstoppanfrage für jegliche MBMS-Sitzung in jeglicher SAI, die aus der MCE pro besagte MBSFN-Bereich-Neukonfiguration entfernt wird.

2. MCE nach Anspruch 1, angepasst zum:
- nach Auftreten einer Neukonfigurationszeit, die in den besagten MCEs konfiguriert ist und zu der eine Neukonfiguration des besagten MBSFN-Bereichs synchron in den besagten MCEs angewendet werden soll, Neuplanen von MBMS-Sitzungen im besagten MBSFN-Bereich, unter Berücksichtigung von Funkparametern, die für den MBSFN-Bereich, wenn überhaupt, modifiziert werden, Starten von MBMS-Sitzungen, die in jeglicher SAI zu starten sind, die pro besagte MBSFN-Bereich-Neukonfiguration hinzugefügt wird, und Stoppen von MBMS-Sitzungen, die in jeglicher SAI zu stoppen sind, die pro besagte MBSFN-Bereich-Neukonfiguration entfernt wird.

3. MCE nach einem beliebigen der Ansprüche 1 bis 2, angepasst zum:
- vor dem Auftreten einer Neukonfigurationszeit, die in den besagten MCEs konfiguriert ist und zu der eine Neukonfiguration des besagten MBSFN-Bereichs synchron in den besagten MCEs angewendet werden soll, Senden von MCE-Neukonfigurations-Aktualisierungsinformationen an die besagte MME, einschließlich jeglicher SAI, die zur MCE pro besagte MBSFN-Bereich-Neukonfiguration hinzugefügt wird.

4. MCE nach einem beliebigen der Ansprüche 1 bis 3, angepasst zum:
- Verschieben bis zu einer Neukonfigurationszeit, die in den besagten MCEs konfiguriert ist und zu der eine Neukonfiguration des besagten MBSFN-Bereichs synchron in den besagten MCEs angewendet werden soll, des Starts von jeglicher MBMS-Sitzung, deren Start angefordert wird von der MME über eine MBMS-Sitzungsstartanfrage in jeglicher SAI, die zur MCE pro besagte MBSFN-Bereich-Neukonfiguration hinzugefügt wird.

5. MCE nach einem beliebigen der Ansprüche 1 bis 4, angepasst zum:
- Verwenden einer Neukonfigurationszeit, die in den besagten MCEs konfiguriert ist und zu der eine Neukonfiguration des besagten MBSFN-Bereichs synchron in den besagten MCEs angewendet werden soll, zum Bestimmen einer MCCH-Aktualisierungszeit für jegliche MBMS-Sitzung, deren Start angefordert wird von der MME über eine MBMS-Sitzungsstartanfrage in jeglicher SAI, die zur MCE pro besagte MBSFN-Bereich-Neukonfiguration hinzugefügt wird.

6. MCE nach einem beliebigen der Ansprüche 1 bis 5, angepasst zum:
- nach dem Auftreten einer Neukonfigurationszeit, die in den besagten MCEs konfiguriert ist und zu der eine Neukonfiguration des besagten MBSFN-Bereichs synchron in den besagten MCEs angewendet werden soll, Senden von MCE-Neukonfigurations-Aktualisierungsinformationen an die besagte MME, welche die besagte MME über jegliche SAI informieren, deren Unterstützung in der MCE pro besagte MBSFN-Bereich-Neukonfiguration von der besagten MCE gestoppt wurde.

7. MCE nach einem beliebigen der Ansprüche 1 bis 6, angepasst zum:
- Aufrechterhalten von MBMS-Sitzungssteuerungsressourcen für die M3AP-Schnittstelle für jegliche MBMS-Sitzung in jeglicher SAI, die pro besagte MBSFN-Bereich-Neukonfiguration entfernt wird, bis zum Empfang einer entsprechenden MBMS-Sitzungsstoppanfrage von der MME.

8. MCE nach einem beliebigen der Ansprüche 1 bis 6, angepasst zum:
- Aufrechterhalten von MBMS-Sitzungssteuerungsressourcen für die M3AP-Schnittstelle für jegliche MBMS-Sitzung in jeglicher SAI, die pro besagte MBSFN-Bereich-Neukonfiguration entfernt wird, und Prüfen, ob nicht irgendeine MBMS-Sitzung in irgendeiner SAI, die pro besagte MBSFN-Bereich-Neukonfiguration entfernt wird, in irgendeinem anderen MBSFN-Bereich involviert ist, der von der besagten MCE gesteuert wird, und wenn ja, lokales Freigeben entsprechender MBMS-Sitzungssteuerungsressourcen.

9. MCE nach einem beliebigen der Ansprüche 1 bis 2, angepasst zum:
- vor dem Auftreten einer Neukonfigurationszeit, die in den besagten MCEs konfiguriert ist und zu der eine Neukonfiguration des besagten MBSFN-Bereichs synchron in den besagten MCEs angewendet werden soll, Senden von MCE-Neukonfigurations-Aktualisierungsinformationen an die besagte MME, welche die besagte MME über jegliche SAI informieren, die pro besagte MBSFN-Bereich-Neukonfiguration hinzugefügt oder aus der MCE entfernt wird, mit der besagten Neukonfigurationszeit.

10. MCE nach Anspruch 9, angepasst zum:
- Verwenden einer MCE-Neukonfigurations-Aktualisierungszeit, die in einer MBMS-Sitzungsstartanfrage angegeben ist, die von der MME empfangen wird, zum Bestimmen einer MCCH-Aktualisierungszeit für MBMS-Sitzungen, deren Start angefordert wird von der MME in jeglicher SAI, die zur MCE pro besagte MBSFN-Bereich-Neukonfiguration hinzugefügt wird.

11. Mobilitätsmanagemententität MME eines mobilen Netzwerks, wobei ein Multimedia-Broadcast/Multicast-Dienst-Einzelfrequenznetzwerk-MBSFN-Bereich durch eine Gruppe von Mehrzellen-/Multicast-Koordinationsentitäten MCEs gesteuert wird, wobei die besagte MME mindestens eine der besagten MCEs steuert, wobei die besagte MME angepasst ist zum:
- nach Empfang, von der besagten MCE, von MCE-Neukonfigurationsinformationen, welche die besagte MME über jegliche Dienstbereichsidentität SAI informieren, die zur MCE pro MBSFN-Bereich-Neukonfiguration hinzugefügt oder entfernt wird, Senden, an die besagte MCE, einer MBMS-Sitzungsstartanfrage für jegliche MBMS-Sitzung in jeglicher SAI, die zur MCE hinzugefügt wird, in den MCE-Neukonfigurationsinformationen, die von der besagten MCE empfangen werden, und/oder einer MBMS-Sitzungsstoppanfrage für jegliche MBMS-Sitzung in jeglicher SAI, die aus der MCE entfernt wird, in den MCE-Neukonfigurationsinformationen, die von der besagten MCE empfangen werden.

12. MME nach Anspruch 11, angepasst zum:
- Empfangen von MCE-Neukonfigurationsinformationen, einschließlich einer Neukonfigurationszeit, von der besagten MCE.

13. MME nach Anspruch 12, angepasst zum:
- Senden, an die besagte MCE, einer MBMS-Sitzungsstoppanfrage, einschließlich eines Informationselements mit einer Zeit eines MBMS-Datenstopps, die auf die besagte Neukonfigurationszeit eingestellt ist, für jegliche MBMS-Sitzung in jeglicher SAI, die aus der MCE entfernt wird, in den MCE-Neukonfigurationsinformationen, die von der besagten MCE empfangen werden.

14. MME nach Anspruch 11, angepasst zum:
- lokalen Freigeben von MBMS-Sitzungssteuerungsressourcen für die M3AP-Schnittstelle für jegliche MBMS-Sitzung in jeglicher SAI, die aus der MCE entfernt wird, in den MCE-Neukonfigurationsinformationen, die von der besagten MCE empfangen werden.

15. MME nach einem beliebigen der Ansprüche 12 bis 14, angepasst zum:
- Senden, an die besagte MCE, einer MBMS-Sitzungsstartanfrage, die eine MCE-Neukonfigurations-Aktualisierungszeit angibt, für MBMS-Sitzungen, deren Start anzufordern ist in jeglicher SAI, die zur MCE hinzugefügt wird, in den MCE-Neukonfigurationsinformationen, die von der besagten MCE empfangen werden.

16. Verfahren zur Neukonfiguration eines Multimedia-Broadcast/Multicast-Dienst-Einzelfrequenznetzwerk-MBSFN-Bereichs in einem mobilen Netzwerk, wobei ein MBSFN-Bereich durch eine Gruppe von Mehrzellen-/Multicast-Koordinationsentitäten MCEs gesteuert wird, wobei das besagte Verfahren die Schritte umfasst, die von einer Mehrzellen-/Multicast-Koordinationsentität MCE nach einem beliebigen der Ansprüche 1 bis 10 ausgeführt werden, oder die Schritte, die von einer Mobilitätsmanagemententität MME nach einem beliebigen der Ansprüche 11 bis 15 ausgeführt werden.

## Revendications

1. Entité de coordination de multidiffusion/multicellulaire MCE d'un réseau mobile selon lequel une zone de réseau de service de diffusion/multidiffusion multimédia monofréquence MBSFN est contrôlée par un ensemble de MCE, lesdites MCE étant contrôlées par une entité de gestion de la mobilité MME, lesdites MCE étant adaptées pour :
- envoyer des informations de mise à jour de reconfiguration de MCE à ladite MME pour signaler à ladite MME toute identité de zone de service SAI ajoutée à la MCE ou SAI supprimée de la MCE lors de la réalisation d'une reconfiguration de zone MBSFN ;
- recevoir en provenance de ladite MME une demande de démarrage de session MBMS pour toute session MBMS dans toute SAI ajoutée à la MCE lors de ladite reconfiguration de zone MBSFN et/ou une demande d'arrêt de session MBMS pour toute session MBMS dans toute SAI supprimée de la MCE lors de ladite reconfiguration de zone MBSFN.

2. MCE selon la revendication 1, adaptée pour :
- lors de la survenue d'un temps de reconfiguration, configuré dans lesdites MCE et durant lequel la reconfiguration de ladite zone MBSFN doit être appliquée de façon synchrone dans lesdites MCE, reprogrammer les sessions MBMS dans ladite zone MBSFN, en prenant en compte les paramètres radio modifiés le cas échéant pour la zone MBSFN, en démarrant les sessions MBMS à démarrer dans toute SAI ajoutée lors de ladite reconfiguration de zone MBSFN et en arrêtant les sessions MBMS à arrêter dans toute SAI supprimée lors de ladite reconfiguration de zone MBSFN.

3. MCE selon l'une quelconque des revendications 1 à 2, adaptée pour :
- avant la survenue d'un temps de reconfiguration, configuré dans lesdites MCE et durant lequel la reconfiguration de ladite zone MBSFN doit être appliquée de façon synchrone dans lesdites MCE, contenant toute SAI ajoutée à la MCE lors de ladite reconfiguration de zone MBSFN.

4. MCE selon l'une quelconque des revendications 1 à 3, adaptée pour :
- reporter jusqu'à un temps de reconfiguration, configuré dans lesdites MCE et durant lequel la reconfiguration de ladite zone MBSFN doit être appliquée de façon synchrone dans lesdites MCE, le démarrage de toute session MBMS dont le démarrage a été demandé par la MME par le biais d'une demande de démarrage de session MBMS dans toute SAI ajoutée à la MCE lors de ladite reconfiguration de zone MBSFN.

5. MCE selon l'une quelconque des revendications 1 à 4, adaptée pour :
- utiliser un temps de reconfiguration, configuré dans lesdites MCE et durant lequel la reconfiguration de ladite zone MBSFN doit être appliquée de façon synchrone dans lesdites MCE, pour déterminer un temps de mise à jour de MCCH pour toute session MBMS dont le démarrage a été demandé par la MME par le biais d'une demande de démarrage de session MBMS dans toute SAI ajoutée à la MCE lors de ladite reconfiguration de zone MBSFN.

6. MCE selon l'une quelconque des revendications 1 à 5, adaptée pour :
- après la survenue d'un temps de reconfiguration, configuré dans lesdites MCE et durant lequel la reconfiguration de ladite zone MBSFN doit être appliquée de façon synchrone dans lesdites MCE, envoyer des informations de mise à jour de reconfiguration de MCE à ladite MME pour signaler à ladite MME toute SAI que ladite MCE a cessé de prendre en charge dans la MCE lors de ladite reconfiguration de zone MBSFN.

7. MCE selon l'une quelconque des revendications 1 à 6, adaptée pour :
- maintenir des ressources de contrôle de session MBMS pour l'interface M3AP pour toute session MBMS dans toute SAI supprimée lors de ladite reconfiguration de zone MBSFN, jusqu'à la réception en provenance de la MME d'une demande d'arrêt de session MBMS correspondante.

8. MCE selon l'une quelconque des revendications 1 à 6, adaptée pour :
- maintenir des ressources de contrôle de session MBMS pour l'interface M3AP pour toute session MBMS dans toute SAI supprimée lors de ladite reconfiguration de zone MBSFN, et vérifier si l'une quelconque des sessions MBMS dans toute SAI supprimée lors de ladite reconfiguration de zone MBSFN n'est pas impliquée dans une autre zone MBSFN quelconque contrôlée par ladite MCE, et si c'est le cas libérer localement les ressources de contrôle de session MBMS correspondantes.

9. MCE selon l'une quelconque des revendications 1 à 2, adaptée pour :
- avant la survenue d'un temps de reconfiguration, configuré dans lesdites MCE et durant lequel la reconfiguration de ladite zone MBSFN doit être appliquée de façon synchrone dans lesdites MCE, envoyer des informations de mise à jour de reconfiguration de MCE à ladite MME pour signaler à ladite MME toute SAI ajoutée à ou supprimée de la MCE lors de ladite reconfiguration de zone MBSFN, avec ledit temps de reconfiguration.

10. MCE selon la revendication 9, adaptée pour :
- utiliser un temps de mise à jour de reconfiguration de MCE indiqué dans une demande de démarrage de session MBMS reçue en provenance de la MME pour déterminer un temps de mise à jour de MCCH pour les sessions MBMS dont le démarrage a été demandé par la MME dans toute SAI ajoutée à la MCE lors de ladite reconfiguration de zone MBSFN.

11. Entité de gestion de la mobilité MME d'un réseau mobile selon lequel une zone de réseau de service de diffusion/multidiffusion multimédia monofréquence MBSFN est contrôlée par un ensemble d'entités de coordination de multidiffusion/multicellulaire MCE, ladite MME contrôlant au moins une desdites MCE, ladite MME étant adaptée pour :
- à la réception en provenance de ladite MCE d'informations de reconfiguration de MCE signalant à ladite MME toute identité de zone de service SAI ajoutée à ou supprimée de la MCE lors de ladite reconfiguration de zone MBSFN, envoyer à ladite MCE une demande de démarrage de session MBMS pour toute session MBMS dans toute SAI ajoutée à la MCE dans les informations de reconfiguration de MCE reçues en provenance de ladite MCE et/ou une demande d'arrêt de session MBMS pour toute session MBMS dans toute SAI supprimée de la MCE dans les informations de reconfiguration de MCE reçues en provenance de ladite MCE.

12. MME selon la revendication 11, adaptée pour :
- recevoir des informations de reconfiguration de MCE contenant un temps de reconfiguration en provenance de ladite MCE.

13. MME selon la revendication 12, adaptée pour :
- envoyer à ladite MCE une demande d'arrêt de session MBMS contenant un élément d'information de temps d'arrêt de données MBMS (Time of MBMS Data Stop) défini sur ledit temps de reconfiguration, pour toute session MBMS dans toute SAI supprimée de la MCE dans les informations de reconfiguration de MCE reçues en provenance de ladite MCE.

14. MME selon la revendication 11, adaptée pour :
- libérer localement des ressources de contrôle de session MBMS pour l'interface M3AP pour toute session MBMS dans toute SAI supprimée de la MCE dans les informations de reconfiguration de MCE reçues en provenance de ladite MCE.

15. MME selon l'une quelconque des revendications 12 à 14, adaptée pour :
- envoyer à ladite MCE une demande de démarrage de session MBMS indiquant un temps de mise à jour de reconfiguration de MCE, pour les sessions MBMS dont le démarrage est demandé dans toute SAI ajoutée à la MCE dans les informations de reconfiguration de MCE reçues en provenance de ladite MCE.

16. Procédé de reconfiguration de zone de réseau de service de diffusion/multidiffusion multimédia monofréquence MBSFN dans un réseau mobile selon lequel une zone MBSFN est contrôlée par un ensemble d'entités de coordination de multidiffusion/multicellulaire MCE, ledit procédé comprenant les étapes réalisées par une entité de coordination de multidiffusion/multicellulaire MCE selon l'une quelconque des revendications 1 à 10, ou les étapes réalisées par une entité de gestion de la mobilité MME selon l'une quelconque des revendications 11 à 15.
